# EUROPEAN PATENT SPECIFICATION

(11) **EP 2 070 777 B1**
(45) Date of publication and mention of the grant of the patent: **15.01.2014**
(21) Application number: 08166897.2
(22) Date of filing: 17.10.2008
(51) Int. Cl.: B60R 21/34

(54) **Airbag device**
Airbagvorrichtung
Dispositif d'airbag

(30) Priority: 13.12.2007 JP 2007322129
(43) Date of publication of application: 17.06.2009
(73) Proprietor: TAKATA CORPORATION, Minato-ku, Tokyo 106-8510 (JP)
(72) Inventor: Nakamura, Atsushi, Tokyo 106-8510 (JP)
(74) Representative: Vossius & Partner

(56) References cited:
- DE-A1- 10 059 207
- DE-A1- 19 803 165
- DE-A1-102004 028 518
- GB-A- 2 397 559

## Description

The present invention relates to a technical field of an airbag device for relieving an impact applied to a collision object and a vehicle by inflating and developing outside the vehicle by gas from an inflator at an emergency, such as a vehicle collision with the collision object.

Hitherto, a device has been provided in that at a vehicle collision with a pedestrian, an airbag is inflated toward the outside of a vehicle pillar portion for relieving an impact applied at a re-collision of the vehicle with the pedestrian.

For example, an airbag device has been disclosed in that an airbag is configured of a roof-header cover portion and front-pillar cover portions, and the bilateral front-pillar cover portions are connected together with a string member, so that an impact applied to a pedestrian is alleviated while the visibility of a driver is being ensured (see JP-A-2006-44569 (Patent Document 1)).

Furthermore, DE 100 59 207A describes a vehicle comprising an airbag device for inflating an airbag arranged outside of the vehicle along a front roof part, adjacent to the windshield, the airbag device comprising the airbag; a gas generator for discharging gas into the airbag; detecting means for detecting a collision; controlling means for actuating the gas generator on the basis of a signal from the detecting means; and a cover for accommodating the airbag therewithin, wherein the gas generator is arranged within a recess provided in a roof panel.

However, in the airbag device described in Patent Document 1, an inflator is mounted on a roof header part; however, there is no space for mounting a module including the inflator in the vicinity of the roof header part of a vehicle body, and an available place has rigidity insufficient for mounting the inflator as well, so that for mounting the inflator, a wide-range remodeling of a vehicle is needed.

When the inflator is mounted on the roof header part of a vehicle with a long nose, such as a sedan, although the collision with a pedestrian is barely possible, the roof header part must be covered with the airbag, so that the airbag capacity and the inflator size are increased, leading to a cost increase along with the increase in weight and size of the device.

The present invention has been made in view of such situations, and it is an object of the invention to provide a vehicle comprising an airbag device in that an inflator is arranged on a small space with sufficient rigidity as well as the device can be simply mounted.

In order to solve the problems described above, the invention comprises a vehicle according to Claim 1.

The vehicle according to Claim 2 of the invention further includes a retainer for retaining the gas generator, in which the retainer includes a body part for holding the gas generator and an attachment part for fixing the gas generator to the vehicle body within the recess.

In the vehicle according to Claim 3 of the invention, the gas generator can be inserted into the recess by sliding the gas generator.

In the vehicle according to the present invention configured in such a manner, the gas generator is arranged within the recess provided in the connection part between the roof and the side panel arranged outside of the vehicle body, so that the gas generator can be easily mounted.
Since the gas generator is also unnecessary to arrange in the vicinity of an engine room unlike the past, neither change in layout of the engine room is necessary nor the vehicle appearance is hindered. Furthermore, since the gas generator is attached to a place where the rigidity is originally high, it is not necessary to additionally reinforce the vehicle. Since the gas generator is also arranged at a place where the collision is barely possible, it is unnecessary to specifically provide an airbag for covering the gas generator.

Since there is provided the retainer for retaining the gas generator and the retainer includes the body part for holding the gas generator and the attachment part for fixing the gas generator to the vehicle body within the recess, the gas generator can be easily attached.

Since the gas generator can also be inserted into the recess by sliding the gas generator, the build-up property is excellent, so that the gas generator 15 can be further easily attached.

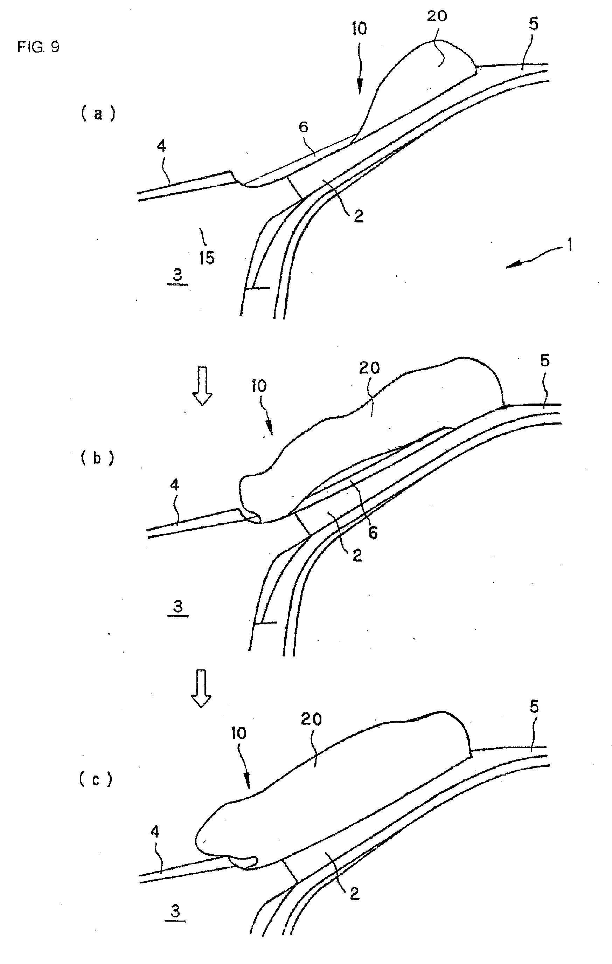

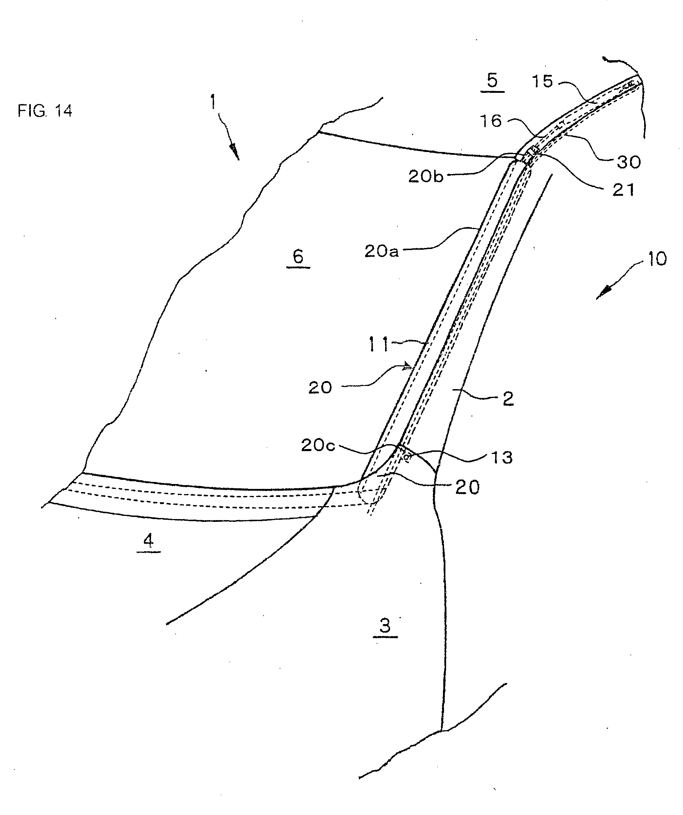

Embodiments of the present invention will be described below with reference to the drawings.
Fig. 1 is a drawing of a vehicle according to an embodiment of the present invention;
Fig. 2 is a perspective view of a vehicle having an airbag device mounted thereon according to the embodiment;
Fig. 3 is a perspective view of the vicinity of a front pillar of the vehicle according to the embodiment;
Fig. 4 is a sectional view at the line a-a of Fig. 3;
Fig. 5 is a sectional view at the line b-b of Fig. 3;
Fig. 6 is a sectional view at the line c-c of Fig. 3;
Fig. 7 is a sectional view at the line d-d of Fig. 3;
Fig. 8 is a drawing showing a mounting method of a gas generator according to the embodiment;
Fig. 9 is a drawing showing the operation of the airbag device according to the embodiment;
Fig. 10 is a perspective view of the vicinity of the front pillar at an inflation completion stage;
Fig. 11 is a sectional view at the line e-e of Fig. 10;
Fig. 12 is a sectional view at the line f-f of Fig. 10;
Fig. 13 is a drawing without the airbag omitted from Fig. 10; and
Fig. 14 is a drawing showing a harness according to another embodiment.

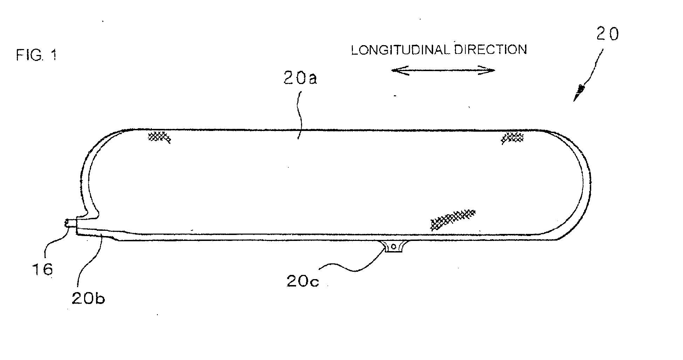

   Fig. 1 shows an airbag 20 according to an embodiment. The airbag 20 according to the embodiment is formed by sewing the periphery of one piece of base cloth and is composed of a principal inflation part 20a, a pipe connection part 20b, and a retainer part 20c. The principal inflation part 20a, having a substantial elliptical shape, serves, during inflating, as a part for alleviating an impact applied to a collision object, such as a pedestrian. The pipe connection part 20b protrudes from the principal inflation part 20a to be fitted to a pipe 16 and calked. The retainer part 20c is arranged to protrude perpendicularly to the longitudinal direction of the principal inflation part 20a for retaining the airbag 20 to a vehicle body.
   Then, a mounted state of the airbag device 10 including the airbag 20 on a vehicle 1 will be described.

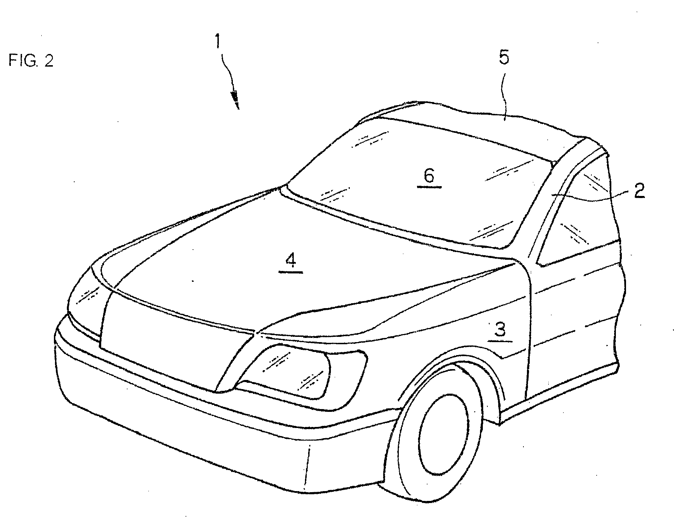

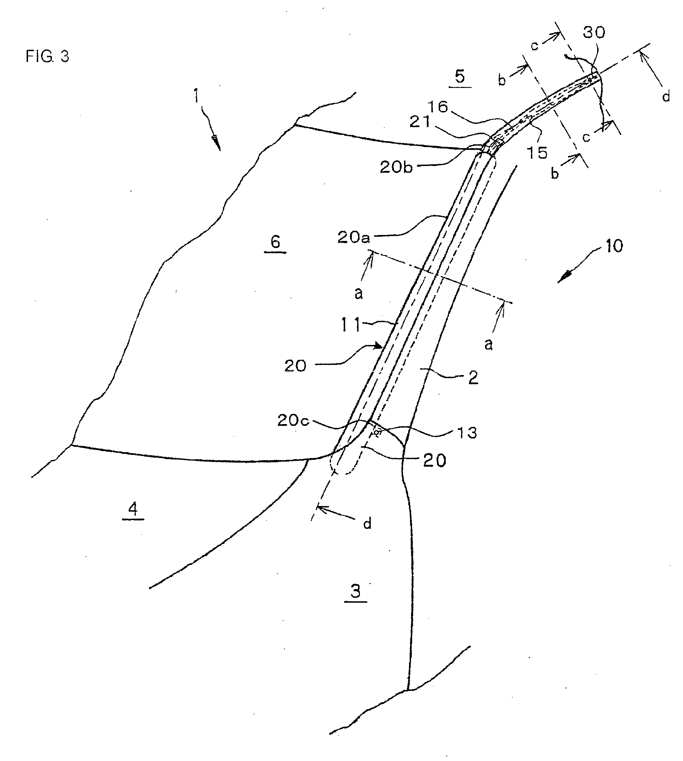

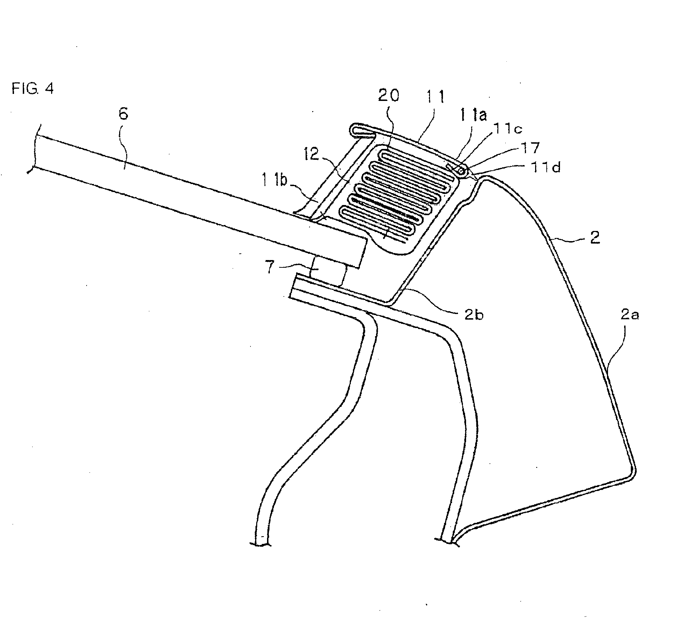

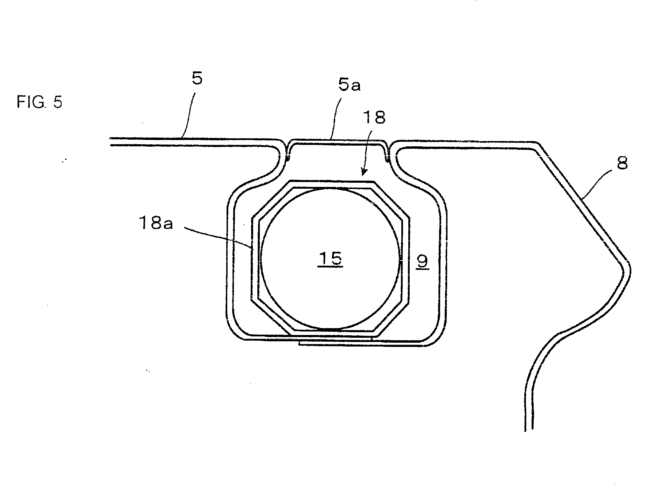

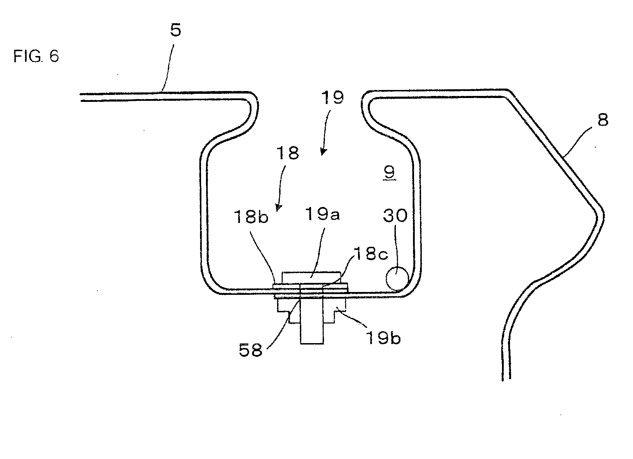

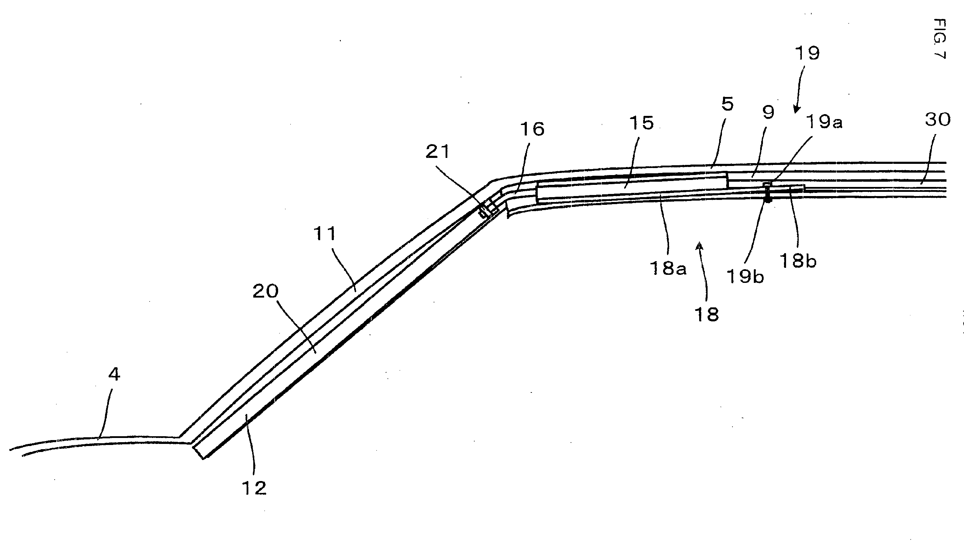

   Fig. 2 is a perspective view of a vehicle having the airbag device according to the embodiment mounted thereon; Fig. 3 is a perspective view of the vicinity of a front pillar of the vehicle according to the embodiment; Fig. 4 is a sectional view at the line a-a of Fig. 3; Fig. 5 is a sectional view at the line b-b of Fig. 3; Fig. 6 is a sectional view at the line c-c of Fig. 3; and Fig. 7 is a sectional view at the line d-d of Fig. 3.
   In the drawings, reference numeral 1 denotes a vehicle; numeral 2 a front pillar; numeral 3 a fender; numeral 4 a hood; numeral 5 a roof; numeral 6 a windshield; numeral 7 a seal; numeral 8 a side outer panel; numeral 9 a recess; numeral 10 an airbag device; numeral 11 a cover; numeral 12 a bag case; numeral 13 an anchor; numeral 15 a gas generator; numeral 16 a pipe; numeral 17 a cover flying resistant member; numeral 18 a retainer; numeral 19 bonding means; numeral 20 an airbag; numeral 21 connecting means; and numeral 30 a harness.
   The vehicle 1 includes the front pillar 2 connecting a not-shown member or an engine room frame to the roof 5 and the windshield 6 attached to the vehicle 1 via the seal 7 and surrounded by the hood 4, the roof 5, and the front pillar 2.
   The airbag device 10 is accommodated along the front pillar 2 adjacent to the windshield 6 and within the fender 3. The front pillar 2 includes a first plane 2a facing the outside of the vehicle 1 and a second plane 2b facing the windshield, and the airbag 20 is folded adjacent to the second plane 2b and is accommodated within the cover 11 in a state stored in the bag case 12.
   The cover 11 is formed of a member with a substantially L-shaped section including an upper cover 11a and a side cover 11b adjacent to the windshield 6, and is arranged to conceal the airbag 20 folded adjacent to the second plane 2b of the front pillar 2. The folded airbag 20 may also be directly accommodated in the cover 11 without storing it in the bag case 12.
   The cover flying-resistant member 17, such as a strap, is inserted into a folded back part 11c of the upper cover 11a in the cover 11.
   In the vicinity of the folded back part 11c of the upper cover 11a, a seal 11d is attached so as to cover the clearance between the front pillar 2 and the cover 11 for improving a graphical design function and water-tightness.
   As shown in Figs. 5 to 7, within the recess 9 formed at a connection part between the roof 5 and the side outer panel 8 of the vehicle body, the gas generator 15 for generating gas for inflating the airbag 20 and the pipe 16 for supplying the gas generated in the gas generator 15 to the airbag 20 are accommodated.
   The gas generator 15 is arranged within the recess 9 in a state covered with the retainer 18, and is fixed to the recess 9 and the side outer panel 8 with the bonding means 19, such as a bolt 19a and a nut 19b. The opening of the recess 9 is blocked off with a roof mole 5a.
   The pipe 16 is arranged within the recess 9 in the same way as in the gas generator 15, and is connected to the airbag 20 with the connecting means 21 such as a clamp band. The connecting means may not also be arranged within the recess 9.
   To the gas generator 15, the harness 30 is connected, which is arranged within the recess 9 along the vehicle back direction to be connected to a power supply and controlling means (not shown).

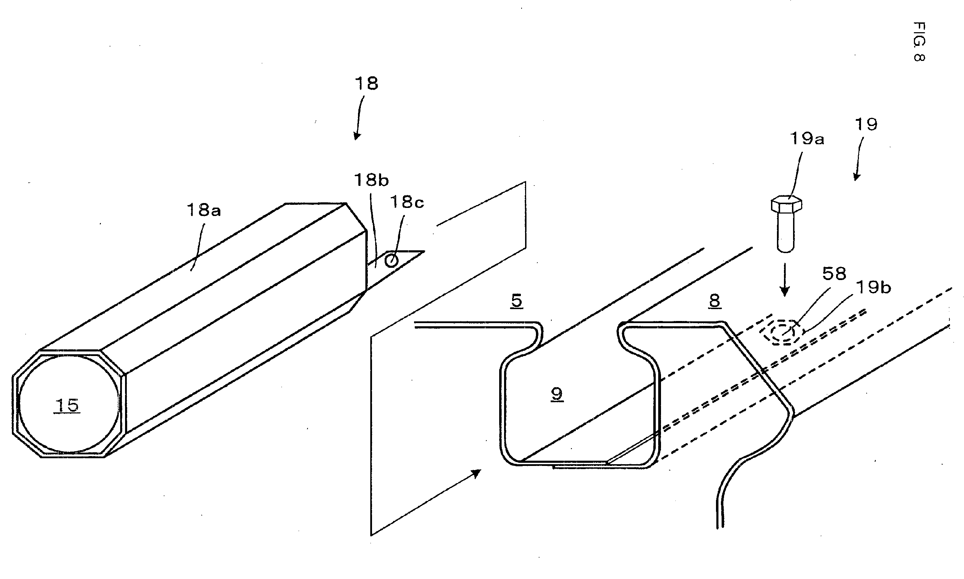

   Fig. 8 is a drawing showing a mounting method of the gas generator 15 according to the embodiment. The retainer 18 includes a body part 18a for covering and holding the gas generator 15, an attachment part 18b for fixing the gas generator 15 to the vehicle body within the recess 9, and an attachment hole 18c. First, the gas generator 15 covered with the retainer 18 is inserted into the recess 9 by sliding the gas generator 15. The connection part in the recess 9 between the roof 5 and the side outer panel 8 is provided with a hole 58 formed thereon, and on the side of the hole 58 opposite to the recess 9, a nut 19b is bonded in advance. Then, the attachment hole 18c of the inserted retainer 18 is arranged to overlap with the hole 58 and is fixed with a bolt 19a.
   Then, the operation of the airbag device 10 according to the embodiment will be described. Fig. 9 shows the operation of the airbag device 10 according to the embodiment.
   When an impact force generated in the vehicle 1 due to a collision of the vehicle 1 with a collision object (not shown) is detected by detecting means, or when collision forecast is detected by the detecting means, the airbag device 10 in an accommodated state as shown in Fig. 3 is operated by controlling means based on the detection signal.
   Fig. 9(a) shows an inflation early stage in that the airbag device 10 starts operating; gas flows into the airbag 20 from the gas generator 15 accommodated within the recess 9 via the pipe 16; and the airbag 20 starts inflating. At the inflation early stage, the airbag 20 starts inflating from the side of the roof 5 and by the inflating pressure, the cover 11 shown Figs. 3 and 4 is developed.
   Fig. 9(b) shows an inflation intermediate stage in that the gas flows into the airbag 20 from the gas generator 15 via the pipe 16 and the airbag 20 continues to inflate. At the inflation intermediate stage, the whole airbag 20 is perfectly exposed outside from a folded state.
   Fig. 9(c) shows an inflation completion stage in that the airbag 20 finishes inflating. At the inflation completion stage, the airbag 20 is perfectly inflated. The state of the airbag device 10 at the inflation completion stage will be described below.

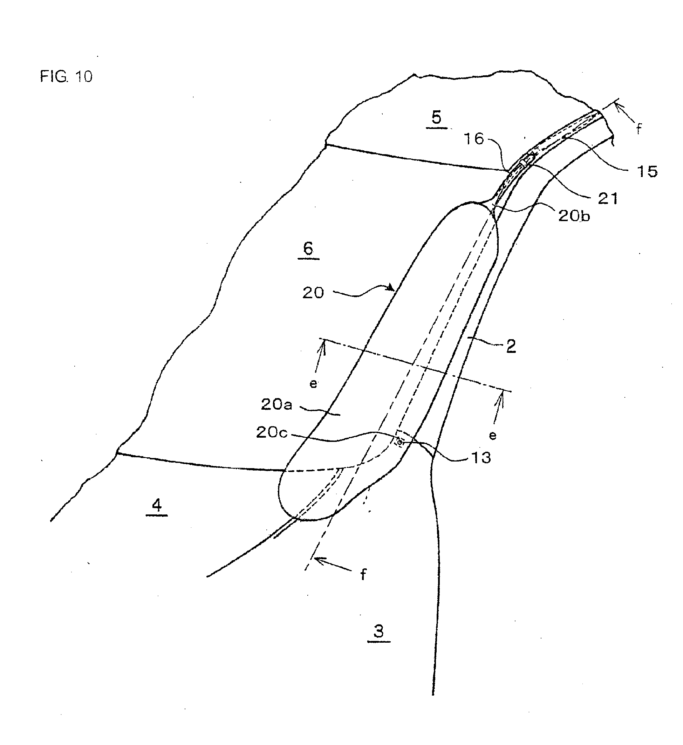

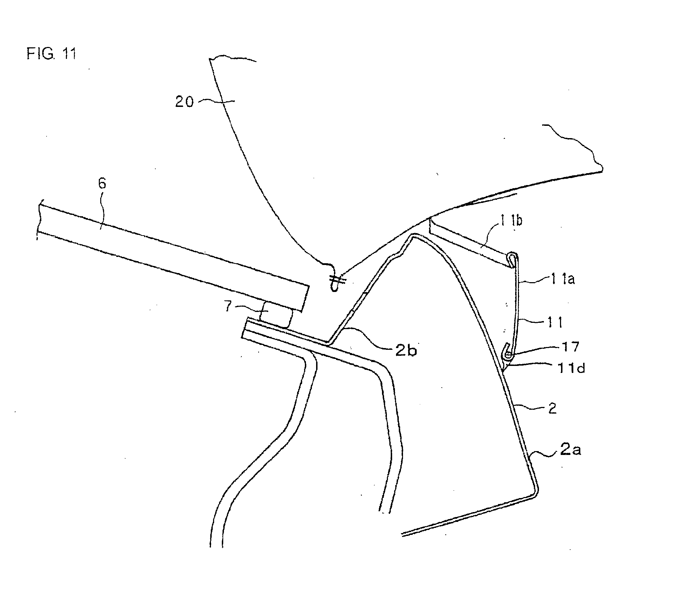

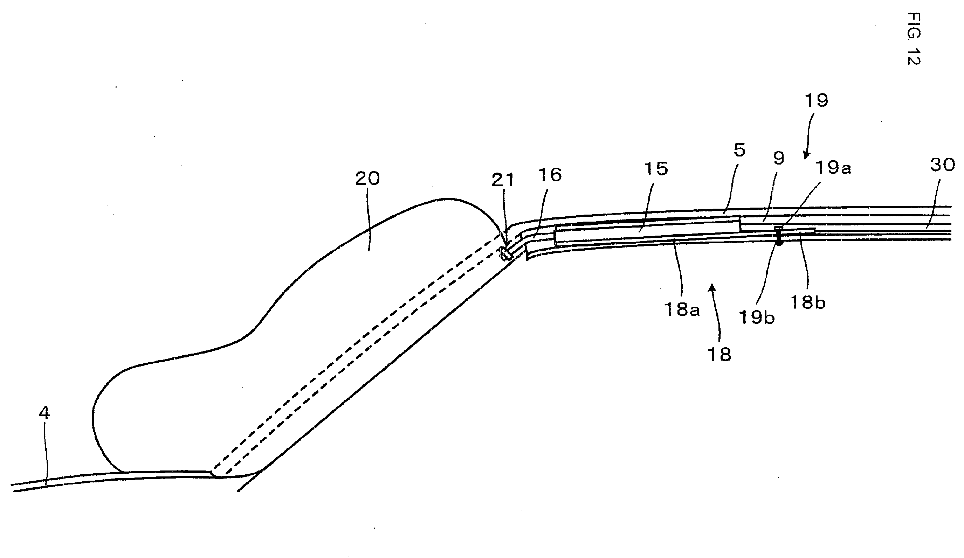

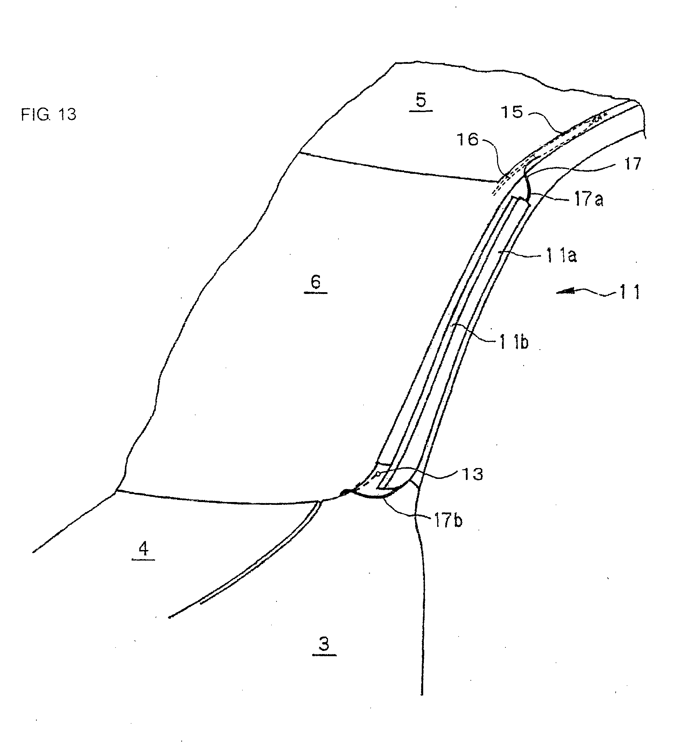

   Fig. 10 is a perspective view of the vicinity of the front pillar 2 at the inflation completion stage; Fig. 11 is a sectional view at the line e-e of Fig. 10; Fig. 12 is a sectional view at the line f-f of Fig. 10; and Fig. 13 is a drawing without the airbag 20 omitted from Fig. 10.
   As shown in Fig. 10, at the inflation completion stage, the airbag 20 develops on the fender 3 and part of the hood 4 and in front of the front pillar 2 in a direction along the front pillar 2.
   As shown in Fig. 11, at the inflation completion stage, the cover 11 is separated from the front pillar 2 and the windshield 6.
   As shown in Fig. 12, at the inflation completion stage, the airbag 20 is inflated in front of the front pillar 2 where the possibility of a collision with a collision object, such as a pedestrian, is strong.
   At this time, as shown in Fig. 13, the cover 11 is retained by the cover flying-resistant member 17 to the vehicle body via the anchor 13 and the gas generator 15, so that the cover 11 cannot fly from the vehicle 1. One end 17b of the cover flying-resistant member 17 is retained to the root of the front pillar 2 or part of a member adjacent to the vehicle body with the anchor 13 while the other end 17a is retained to the gas generator 15 or a member for fixing the gas generator 15 to the vehicle body. The cover flying-resistant member 17 may also be divided into a first cover flying-resistant member 17a for connecting the cover 11 to the gas generator 15 and a second cover flying-resistant member 17b for connecting the anchor 13 to the cover 11.
   As shown in Fig. 14, another embodiment may also have a structure in that the harness 30 connected to the gas generator 15 is folded back from the rear side to extend along the vehicle front direction within the recess 9.
   Since the gas generator 15 is arranged within the recess 9 provided in the connection part outside the vehicle body between the roof 5 and the side panel 8 in such a manner, the gas generator 15 can be easily mounted. Since the gas generator 15 is also unnecessary to arrange in the vicinity of an engine room unlike the past, neither change in layout of the engine room is necessary nor the vehicle appearance is hindered. Furthermore, since the gas generator 15 is attached to a place where the rigidity is originally high, it is not necessary to additionally reinforce the vehicle. Since the gas generator 15 is also arranged at a place where the collision is barely possible, it is unnecessary to specifically provide an airbag for covering the gas generator.
   There is also provided the retainer 18 for retaining the gas generator 15, and the retainer 18 includes the body part 18a for holding the gas generator 15 and the attachment part 18b for fixing the gas generator 15 to the vehicle body within the recess 9, so that the gas generator 15 can be easily mounted.
   Since the gas generator 15 can be inserted into the recess 9 by sliding the gas generator 15, the build-up property is excellent, so that the gas generator 15 can be further easily mounted.
   In the vehicle according to the present invention, the gas generator is arranged within the recess provided in the connection part between the roof and the side panel arranged outside of the vehicle body, so that the gas generator can be easily mounted. Since the gas generator is also unnecessary to arrange in the vicinity of an engine room unlike the past, neither change in layout of the engine room is necessary nor the vehicle appearance is hindered. Furthermore, since the gas generator is attached to a place where the rigidity is originally high, it is not necessary to additionally reinforce the vehicle. Since the gas generator is also arranged at a place where the collision is barely possible, it is unnecessary to specifically provide an airbag for covering the gas generator.
   Since there is provided a retainer for retaining the gas generator and the retainer includes a body part for holding the gas generator and an attachment part for fixing the gas generator to the vehicle body within the recess, the gas generator can be easily mounted.
   Since the gas generator can also be inserted into the recess by sliding the gas generator, the build-up property is excellent, so that the gas generator 15 can be further easily mounted.

## Claims

1. A vehicle comprising an airbag device (10) for inflating an airbag (20) arranged outside of the vehicle along a front pillar (2), adjacent to the windshield (6) and within the fender (3), the airbag device (10) comprising:
the airbag (20);
a gas generator (15) for discharging gas into the airbag (20);
detecting means for detecting a collision;
controlling means for actuating the gas generator (15) on the basis of a signal from the detecting means; and
a cover (11) for accommodating the airbag (20) therewithin,
wherein
the front pillar (2) includes a first plane (2a) facing the outside of the vehicle (1) and a second plane (2b) facing the windshield (6),
the airbag (20) is folded adjacent to the second plane (2b) of the front pillar (2), and
the gas generator (15) is arranged within a recess (9) provided in a connection part between a roof (5) and a side panel (8) arranged outside of a vehicle body.

2. The vehicle according to Claim 1,
wherein the airbag device (10) further comprises a retainer (18) for retaining the gas generator (15),
wherein the retainer (18) includes a body part (18a) for holding the gas generator (15) and an attachment part (18b) for fixing the gas generator (15) to the vehicle body within the recess (9).

3. The vehicle according to Claim 1 or 2, wherein the gas generator (15) can be inserted into the recess (9) by sliding the gas generator (15).

## Patentansprüche

1. Fahrzeug mit einer Airbagvorrichtung (10) zum Aufblasen eines außerhalb des Fahrzeugs entlang einer vorderen Säule (2) angeordneten Airbags (20), die zur Windschutzscheibe (6) benachbart und im Kotflügel (3) angeordnet ist, wobei die Airbagvorrichtung (10) aufweist:
den Airbag (20);
einen Gasgenerator (15) zum Einleiten von Gas in den Airbag (20);
eine Erkennungseinrichtung zum Erkennen einer Kollision;
eine Steuereinrichtung zum Betätigen des Gasgenerators (15) auf Basis eines Signals von der Erkennungseinrichtung; und
eine Abdeckung (11), um darin den Airbag (20) unterzubringen,
wobei
die vordere Säule (2) eine erste der Außenseite des Fahrzeugs (1) zugewandte Ebene (2a) und eine zweite der Windschutzscheibe (6) zugewandte Ebene (2b) aufweist,
der Airbag (20) benachbart zur zweiten Ebene (2b) der vorderen Säule (2) gefaltet ist, und
der Gasgenerator (15) in einer Ausnehmung (9) angeordnet ist, die in einem außerhalb einer Fahrzeugkarosserie angeordneten Verbindungsteil zwischen einem Dach (5) und einem Seitenpaneel (8) vorgesehen ist.

2. Fahrzeug nach Anspruch 1,
wobei die Airbagvorrichtung (10) ferner eine Halterung (18) zum Befestigen des Gasgenerators (15) aufweist,
wobei die Halterung (18) einen Teil (18a) zum Halten des Gasgenerators (15) und ein Anbauteil (18b) zum Befestigen des Gasgenerators (15) an der Fahrzeugkarosserie innerhalb der Ausnehmung (9) aufweist.

3. Fahrzeug nach Anspruch 1 oder 2, wobei der Gasgenerator (15) durch Einschieben in die Ausnehmung (9) einsetzbar ist.

## Revendications

1. Véhicule comprenant un dispositif d'airbag (10) pour le gonflage d'un airbag (20) disposé à l'extérieur du véhicule le long d'un montant avant (2) adjacent au pare-brise (6) et à l'intérieur de l'aile (3), ledit dispositif d'airbag (10) comprenant :
l'airbag (20) ;
un générateur de gaz (15) destiné à refouler un gaz dans l'airbag (20) ;
un moyen de détection destiné à détecter une collision ;
un moyen de commande destiné à actionner le générateur de gaz (15) à partir d'un signal du moyen de détection ; et
un couvercle (11) destiné à contenir l'airbag (20) ;
et où
le montant avant (2) présente un premier plan (2a) opposé à l'extérieur du véhicule (1) et un deuxième plan (2b) opposé au pare-brise (6),
l'airbag (20) est plié adjacent au deuxième plan (2b) du montant avant (2), et
le générateur de gaz (15) est disposé à l'intérieur d'un logement (9) ménagé dans une pièce de connexion entre le toit (5) et un panneau latéral (8) à l'extérieur de la caisse du véhicule.

2. Véhicule selon la revendication 1,
où le dispositif d'airbag (10) comprend en outre un élément de maintien (18) destiné à maintenir le générateur de gaz (15),
l'élément de maintien (18) comportant une partie de caisse (18a) destinée à supporter le générateur de gaz (15), et une partie de fixation (18b) destinée à fixer le générateur de gaz (15) sur la caisse du véhicule à l'intérieur du logement (9).

3. Véhicule selon la revendication 1 ou la revendication 2, où le générateur de gaz (15) peut être introduit dans le logement (9) en faisant glisser ledit générateur de gaz (15).
